# EUROPEAN PATENT SPECIFICATION

(11) **EP 3 868 044 B1**
(45) Date of publication and mention of the grant of the patent: **20.09.2023**
(21) Application number: 18808296.0
(22) Date of filing: 22.11.2018
(51) Int. Cl.: H04L 1/00

(54) **DEVICES AND METHODS FOR SUPPORTING HARQ FOR IEEE 802.11**
VORRICHTUNGEN UND VERFAHREN ZUR UNTERSTÜTZUNG VON HARQ FÜR IEEE 802.11
DISPOSITIFS ET PROCÉDÉS DE PRISE EN CHARGE DE HARQ POUR IEEE 802,11

(43) Date of publication of application: 25.08.2021
(73) Proprietor: Huawei Technologies Co., Ltd., Longgang District Shenzhen, Guangdong 518129 (CN)
(72) Inventor: SHILO, Shimon, 80992 Munich (DE); EPSTEIN, Leonid, 80992 Munich (DE); YU, Jian, 80992 Munich (DE); EZRI, Doron, 80992 Munich (DE)
(74) Representative: Roth, Sebastian
(86) International application number: PCT/EP2018/082208
(87) International publication number: WO 2020/104029

(56) References cited:
- EP-A1- 1 496 633
- EP-A1- 1 858 187
- EP-A1- 3 200 369
- US-A1- 2009 276 671

## Description

### TECHNICAL FIELD

The present application relates to Hybrid Automatic Repeat Request (HARQ) in wireless communication technologies, particularly HARQ for IEEE 802.11, i.e. HARQ for Wi-Fi. To this end, the application proposes a transmitting device and a receiving device, respectively, both configured to support such HARQ in Wi-Fi, and further proposes corresponding HARQ methods that are compatible with IEEE 802.11.

### BACKGROUND

In existing 802.11 systems, including 802.11a/g/n/ac/ax, the bits/QAMs (QAMs being symbols of Quadrature Amplitude Modification (QAM)) to be transmitted undergo some form of interleaving in frequency. The interleaving sequence depends, typically, on the transmission parameters such as the bandwidth, modulation, coding rate, etc. Furthermore, this interleaving sequence does not change with time, which means that consecutive retransmissions using the same transmission parameters (e.g. same bandwidth, same modulation and coding rate) will undergo the same, identical interleaving.

HARQ is a feature widely used in various wireless technologies such as UMTS and LTE (where it is mandatory). Unlike ARQ, where packets decoded incorrectly are discarded at the receiver and are then retransmitted (by the transmitter), with HARQ - soft combining (or combining of equalized tones) is enabled. This means that the log-likelihood ratios (LLRs) respective to incorrectly decoded packets are stored in memory and combined with retransmissions of the same information bits, thus increasing the probability for correct packet detection (after retransmission). Due to the improved performance (after HARQ combining), practical wireless systems employing HARQ can also use a lower fade margin in the rate selection algorithm - this means that the rate selection mechanism can effectively uses a higher Modulation and Coding Scheme (MCS).

HARQ is now being considered for the next generation 802.11 standard, called Extreme High Throughput (EHT). When HARQ is used, failed packets are not discarded, but rather the LLRs (or equalizer outputs) are stored in memory to be combined with future retransmissions, hence improving the probability for correct detection. Thus, HARQ improves the performance by combining several retransmissions, which experience a potentially different channel and noise/interference. The thermal noise, which changes between retransmissions, can be averaged and hence reduced - improving the Signal to Noise Ratio (SNR) at the receiver. In addition, changes in the channel between transmission and retransmission, stemming from the channel varying over time, and/or an introduction of frequency diversity between retransmissions, can yield further gain.

In particular, similar to other wireless standards, 802.11 uses an interleaver to spread the bits/QAMs in frequency such that they experience frequency diversity, and a fade in frequency affects bits which are not consecutive. Several different interleavers are defined:
- Bit interleaving for Binary Convolutional Coding (BCC)
- Tone Mapping (on top of QAM outputs) for Low Density Parity Check (LDPC)

Since HARQ is not supported in any of the existing 802.11 standards (a/g/n/ac/ax), there is currently no need for diversity between retransmissions. Hence, the same interleaver/tone mapping is used between retransmissions. Since the interleaver does not change between transmissions (mostly when transmission parameters do not change, but could happen in other cases as well), straightforwardly combining multiple retransmission with HARQ would yield only a limited benefit, since noise is averaged, and there is no diversity.

EP 1 496 633 A1 discloses in a multicarrier communication, when an error occurs in received data, a subcarrier that transmits data is changed to perform retransmission, thereby increasing the chance that reduces the correlation between the branches to increase the diversity gains and improve a throughput. EP 1 858 187 A1 discloses a MIMO transmitting apparatus in which interleaving in codewords transmitted at the same time from a plurality of transmitting antennas is carried out by using an interleave pattern different for each retransmission. US 2009/276671 A1 discloses methods and apparatuses for rearranging data bits for transmission in a hybrid automatic repeat request scheme. EP 3 200 369 A1 discloses a controller 130 of the transmitting station 100 controls an interleave pattern depending on the number of retransmissions.

### SUMMARY

In view of the above-mentioned problems and disadvantages, embodiments of the present application aim to introduce HARQ to the next generation of 802.11. In particular, an objective is to employ the full benefit of HARQ in Wi-Fi. Hence, the embodiments of the application aim to enable HARQ retransmissions to experience some sort of frequency diversity.

The objective is achieved by embodiments as provided in the enclosed independent claims. Advantageous implementations of the embodiments are further defined in the dependent claims.

An idea is in particular that, if the interleaving sequence were to be changed between retransmissions, it could be ensured that transmitted bits/QAMs experience a different channel between retransmission. This would add (frequency) diversity, thus improving the performance.

A first aspect of the application provides a transmitting device for supporting HARQ, according to appended claim 1.

A data unit may be a sequence of bits/QAMs. The device of the first aspect enables bits/QAMs within multiple (identical or nearly identical) retransmission to experience a different channel, hence improving the performance after HARQ combining at the receiver side. In particular, the interleaving sequence is changed between (re)transmissions. This means that if a transmission fails, the retransmitted bits/QAMs will be transmitted using a different interleaving sequence, i.e. on different channels, so that they will experience frequency diversity and hence performance is improved. Thus, the transmitting device of the first aspect achieves better performance with the introduction of HARQ into 802.11 than conventional transmitting devices.

A second aspect of the application provides a receiving device for supporting HARQ, according to appended claim 7.

A third aspect of the application provides a method for supporting HARQ, according to appended claim 11.

A fourth aspect of the application provides a method for supporting HARQ, according to appended claim 12.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present application will be explained in the following description of specific embodiments in relation to the enclosed drawings, in which
- FIG. 1: shows a transmitting device according to an embodiment of the application.
- FIG. 2: shows a receiving device according to an embodiment of the application.
- FIG. 3: shows a performance comparison result of using different transmission solutions.
- FIG. 4: shows a method according to an embodiment of the application.
- FIG. 5: shows a method according to an embodiment of the application.

### DETAILED DESCRIPTION OF EMBODIMENTS

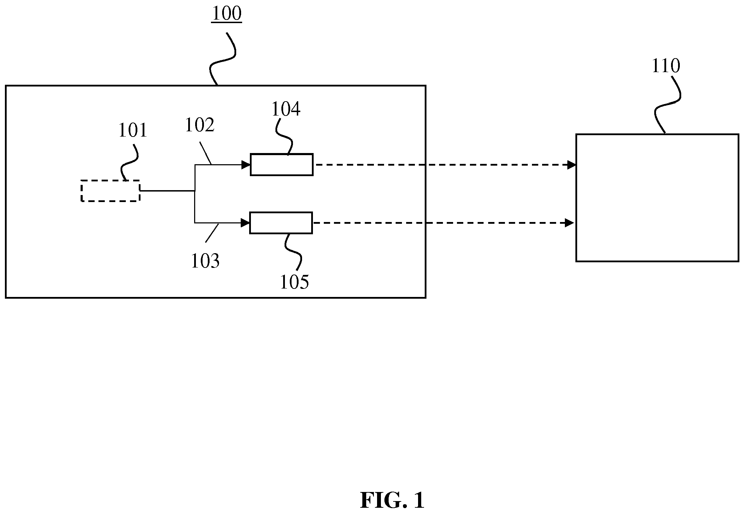

FIG. 1 shows a transmitting device 100 according to an embodiment of the application. The transmitting device 100 is configured to support HARQ, particularly HARQ for IEEE 802.11 / Wi-Fi. That means, the device 100 may be an 802.11-standard transmitting device supporting HARQ. The transmitting device 100 may be a transmitter or may be included in a transmitter.

The transmitting device 100 is configured to select a first interleaving sequence 102. The interleaving sequence depends, typically, on the transmission parameters such as the bandwidth, modulation, coding rate, etc. Further, the transmitting device 100 is configured to interleave a data unit 101 using the first interleaving sequence 102 to obtain a first interleaved data unit 104 to be transmitted to a receiving device 110. The data unit 101 may be a sequence of bits or of QAMs.

If, for instance, a transmission fails or cannot be decoded at the receiving device 110, that is generally, if a retransmission of the data unit 101 is required, the transmitting device 100 is configured to select a second interleaving sequence 103, and interleave the data unit 101 using the second interleaving sequence 103 to obtain a second interleaved data unit 105 to be transmitted to the receiving device 110. The transmitting device 100 may transmit the first interleaved data unit 104 to the receiving device 110. The transmitting device 100 may transmit, if necessary, the second interleaved data unit 105 to the receiving device. The transmitting may, however, also be performed by another device. In any case, for the initial transmission of the data unit 101 and the retransmission of the data unit 101, respectively, different interleaving sequences 102, 103 are used, i.e. the interleaving sequence changes with (e.g. consecutive) retransmissions.

Conventionally, the interleaving sequence does not change with time, which means that (consecutive) retransmissions using the same transmission parameters (e.g. same bandwidth, same modulation and coding rate) will undergo the same, identical interleaving. The transmitting device 100, however, is configured to change the interleaving sequence for (re)transmissions, particularly consecutive (re)transmissions, in order to achieve an HARQ with an improved performance for Wi-Fi.

For instance, the transmitting device 100 may be configured to select the first interleaving sequence 102 based on one or more transmission parameters, particularly based on a transmission signal bandwidth. The second interleaving sequence 103 for (e.g. consecutive) retransmissions, or even for each further retransmission, may be selected differently, i.e. not using a same interleaving sequence for at least one retransmission. For example, the transmitting device 100 may be further configured to select the second interleaving sequence 103 based on the first interleaving sequence 102, e.g. to derive the second interleaving sequence 103 from the first interleaving sequence 102 according to some rule.

For instance, the second interleaving sequence 103 may be the first interleaving sequence 102 cyclically shifted in the frequency domain. The first interleaving sequence 102 may thereby initially be selected using a way currently defined in the 802.11 standard, e.g. either for BCC, or LDPC, or Turbo encoding. Then, the first interleaving sequence 102 may be cyclically shifted in frequency, in order to form the second interleaving sequence 103 based on the first interleaving sequence 102. In particular, one example is to cyclically shift the first interleaving sequence by half the signal bandwidth. For example, if the signal is transmitted on 100 subcarriers, the shift would be by 50 subcarriers (e.g. the first interleaving sequence may be represented by P₁P₂...P₅₀P₅₁P₅₂...P₁₀₀, while the second interleaving sequence may be represented by P₅₁P₅₂...P₁₀₀P₁P₂...P₅₀, wherein P_{N} indicates mapping to the nth subcarrier). The interleaving sequence may also be shifted differently. For example, if the signal is transmitted on 100 subcarriers, the shift may be by 17 subcarriers (e.g. the first interleaving sequence may be represented by P₁P₂... P₈₃P₈₄P₈₅ ... P₁₀₀, the second interleaving sequence may be represented by P₁₈P₁₉...P₁₀₀P₁P₂...P₁₇). The first interleaving sequence may be cyclically shifted by another number of subcarriers, and may be set according to actual requirements. This solution is simple to implement. The first interleaving sequence 102 may be stored in the memory of the transmitting device. The transmitting device can read the information regarding the first interleaving sequence 102 from the memory and may apply the shifting to obtain the second interleaving sequence 103.

The second interleaving sequence 103 is the first interleaving sequence 102 flipped in the frequency domain. In this implementation, if the first interleaving sequence is e.g. represented by P₁P₂...P₁₀₀, the second interleaving sequence will be represented by P₁₀₀P₉₉...P₁. This solution is also simple to implement, and the existing interleaving sequence can again be read from the memory and is mapped upwards instead of downwards in frequency.

Alternatively, in one (or more) of the retransmissions, an interleaver may not be used at all. In this case, after the transmitting device 100 interleaves the data unit 101 using the first interleaving sequence 102, and transmits the first interleaved data unit 104 to the receiving device 110, if the transmission fails, the transmitting device 100 transmits the data unit 101 directly to the receiving device 110 in a retransmission (without performing interleaving). This can effectively also be achieved by selecting a specific second interleaving sequence 103, which, when the transmitting device 100 interleaves the data unit 101 using this second interleaving sequence 103, yields a second interleaved data unit 105 that is identical to the original data unit 101. This may be similar to what is implemented in the HE-SIG-A field (802.1 1ax) in Extended Range mode, where half of the data field is interleaved and the other half is not.

The transmitting device 100 may also change multiple times between interleaving sequences, thereby applying a combination of one of the above-described schemes to derive a second interleaving sequence 103 from a first interleaving sequence 102, or apply different or same schemes after another.

The transmitting device 100 may be further configured to indicate to the receiving device 110 the first and/or second interleaving sequence 102 and/or 103. In order to correctly perform de-interleaving and decode the transmitted data, the receiver needs to know what interleaving sequence is used at the transmitter side. If different interleaving sequences are used by the transmitting device 100, the transmitting device 100 may indicate to the receiving device 110 information regarding the interleaving sequences used in each transmission.

The change in interleaving sequences between retransmissions may be pre-defined and not signaled within each retransmission. Or, the interleaving sequences (or change in the interleaving sequence) may be signaled within one of the SIG fields in a transmission. In this scenario, the transmitting device 100 may be further configured to indicate to the receiving device 110 the second interleaving sequence 103 using a SIG field.

In addition, Stations (STAs) supporting a dynamic interleaver will be required to advertise supported interleaver configurations as part of capabilities negotiation.

The transmitting device 100 may be configured to perform the interleaving of the data unit on coded bits following a BCC encoding; and/or perform the interleaving of the data unit on modulated QAMs following a LDPC; and/or perform the interleaving of the data unit within a Turbo encoder. Turbo encoding can be introduced in addition to BCC and LDPC encoding. With Turbo encoding, two convolutional encoders may be used in parallel, with a different interleaving sequence used for each of the convolutional encoders.

Further, the transmitting device 100 may select different interleaving sequences for each retransmission. In particular if a retransmission also fails or cannot be decoded at the receiving device 110, another retransmission will be required. For example, the transmitting device 100 may be configured to select a third interleaving sequence and interleave the data unit 101 using the third interleaving sequence to obtain a third interleaved data unit to be transmitted to the receiving device 110.

If a data unit needs to be transmitted for N times, N being a natural number greater than 2, N different interleaving sequences may be selected by the transmitting device 100. For instance, a first transmission may base on a first interleaving sequence, a second transmission may base on a second interleaving sequence, a third transmission may base on a third interleaving sequence, a fourth transmission may base on a fourth interleaving sequence, etc. The first, second, third and fourth interleaving sequences are in this case all different to each other. For example, the second interleaving sequence may be the first interleaving cyclically shifted by e.g. half of the signal bandwidth; the third interleaving sequence may be the first interleaving sequence flipped in frequency; and the fourth transmission may not use an interleaver, i.e. the interleaved data unit using the fourth interleaving sequence is identical to the original data unit. Details are not described here again, and reference is made to above.

In another embodiment, the third interleaving sequence may be identical to the first interleaving sequence, and the fourth interleaving sequence may be identical to the second interleaving sequence.

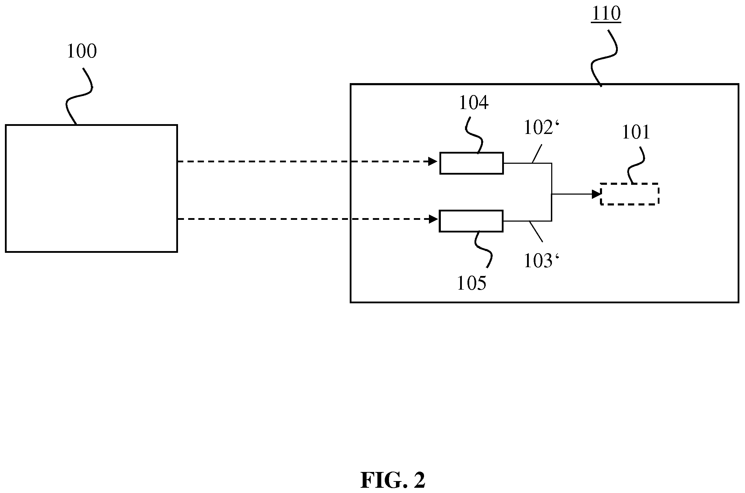

FIG. 2 shows a receiving device 110 according to an embodiment of the application. The receiving device 110 is configured to support HARQ, particularly HARQ for IEEE 802.11 / Wi-Fi. That means, the device 110 may be an 802.11-standard receiving device supporting HARQ. The receiving device 110 of FIG. 2 is particularly the receiving device 110 of FIG. 1. The transmitting device 100 shown in FIG. 2 may be the one shown in FIG. 1. The receiving device 110 may be a receiver or may be included in a receiver.

The receiving device 110 may be configured to operate inversely to the transmitting device 100 of FIG. 1. In particular, the receiving device 110 is configured to receive a first interleaved data unit 104, and select a first de-interleaving sequence 102' according to a first interleaving sequence 102. Further, the receiving device 110 is configured to de-interleave the first interleaved data unit 104 using the first de-interleaving sequence 102' to obtain the data unit 101. If a retransmission of the data unit is required, the receiving device 110 is configured to receive a second interleaved data unit 105, and select a second de-interleaving sequence 103' according to a second interleaving sequence 103. Further, the receiving device 110 is configured to de-interleave the second interleaved data unit 105 using the second de-interleaving sequence 103' to obtain the retransmission of the data unit 101.

The receiver should know what interleaving sequence is used at the transmitter side, in order to correctly perform de-interleaving and decode the transmitted data. Thus, the receiving device 110 may be further configured to obtain an indication of the first and/or second interleaving sequence from e.g. the transmitting device 100. Based on the information regarding the first and/or second interleaving sequence obtained e.g. from the transmitting device 100, the receiving device 110 can select the corresponding first and/or second de-interleaving sequence to perform the de-interleaving. In addition, the receiving device 110 may be further configured to extract an indication of the second interleaving sequence 103 from a SIG field.

Particularly, the receiving device 110 may be further configured to soft-combine the retransmission of the data unit and the previously transmitted data unit. By combining several retransmissions which experience a potentially different channel and noise/interference, the decoding performance is increased. Furthermore, because additional frequency diversity is achieved when the channel changes between retransmissions, the thermal noise, which changes between retransmissions, can be further averaged and hence reduced - which further and significantly improving the Signal to Noise Ratio (SNR) at the receiver. Thus, the transmitting device 100 and receiving device 110 enable an efficient integration of HARQ into the 802.11 standard.

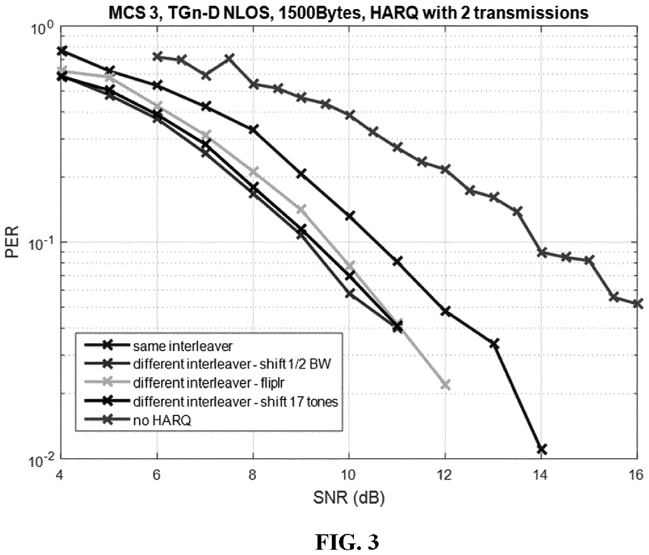

Fig. 3 shows a comparison of results of SNR using different interleaving solutions. It is assumed that the channel is constant across two transmissions (transmission and a retransmission). Solutions proposed with embodiments of the present application are compared with the existing solutions (i.e. same interleaver across all retransmissions). A first solution uses a second interleaving sequence, which is the first interleaving sequence cyclically shifted at half the bandwidth in retransmission. A second solution uses a second interleaving sequence which is the first interleaving sequence cyclically shifted by 17 tones in retransmission. A third solution uses a second interleaving sequence which is the first interleaving sequence flipped in frequency. Notably, as shown in Fig. 3, the first solution yields the best performance (~1.5dB over the same interleaver), followed closely by the second solution and then by the third solution. Thus, the idea of using different interleaving sequences across retransmissions enables bits/QAMs within multiple (identical or nearly identical) retransmission to experience a different channel, hence further improving the performance after HARQ combining at the receiver side.

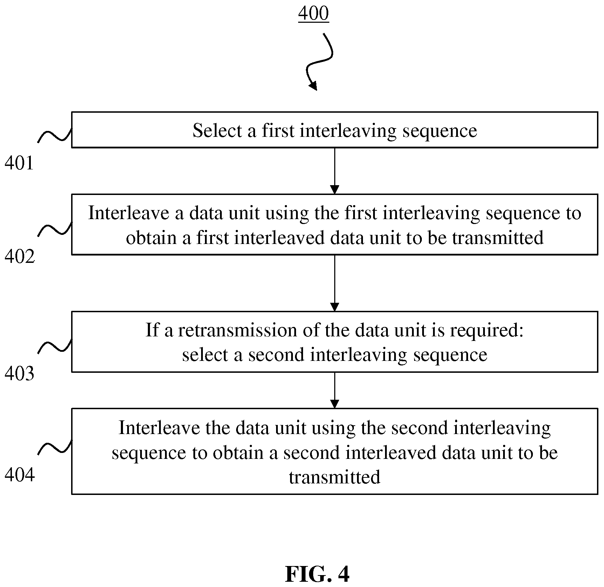

FIG. 4 shows a method 400 according to an embodiment of the application, particularly for supporting HARQ. The method 400 comprises: a step 401 of selecting a first interleaving sequence 102; a step 402 of interleaving a data unit 101 using the first interleaving sequence 102 to obtain a first interleaved data unit 104 to be transmitted; a step 403 of selecting a second interleaving sequence 103 if a retransmission of the data unit is required; and a step 504 of interleaving a data unit 101 using the second interleaving sequence 103 to obtain a second interleaved data unit 105 to be transmitted. The method 400 may be performed by a transmitting device 100, and the first interleaved data unit 104 and/or second interleaved data unit 105 may be transmitted to a receiving device 110.

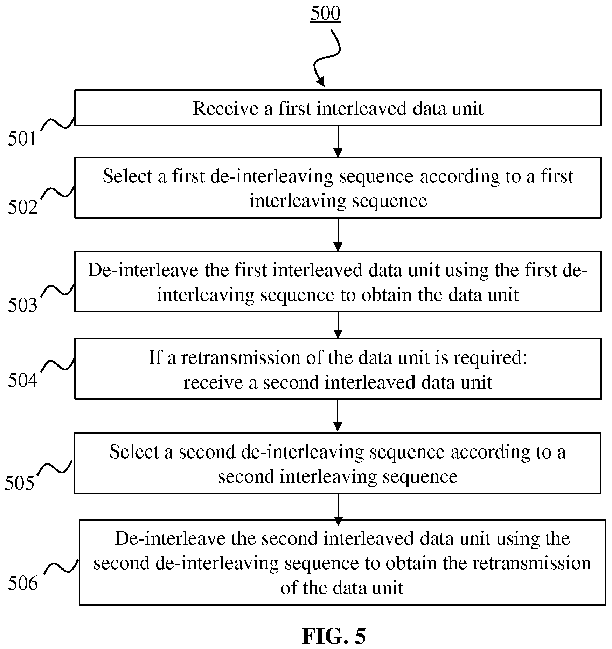

FIG. 5 shows a method 500 according to an embodiment of the application, particularly for supporting HARQ. The method 500 comprises: a step 501 of receiving a first interleaved data unit 104; a step 502 of selecting a first de-interleaving sequence 102' according to a first interleaving sequence 102; a step 503 of de-interleaving the first interleaved data unit 104 using the first de-interleaving sequence 102' to obtain the data unit 101; a step 504 of receiving a second interleaved data unit 105 if a retransmission of the data unit is required; a step 505 of selecting a second de-interleaving sequence 103' according to a second interleaving sequence 103; and a step 506 of de-interleaving the second interleaved data unit 105 using the second de-interleaving sequence 103' to obtain the retransmission of the data unit 101. The method 500 may be performed by a receiving device 110, and the first interleaved data unit 104 and/or second interleaved data unit 105 may be received from a transmitting device 100.

In summary, embodiments of the present application achieve multiple benefits. A sequence of bits/QAMs within multiple (identical or nearly identical) retransmissions experiences a different channel, hence improving the performance after HARQ combining at the receiver side. The simulation results indicate that HARQ with dynamic interleavers (dynamic, i.e. changing, interleaving sequence) achieve better performance and significantly lower SNR than without HARQ or using the same interleaver (static interleaving sequence).

The present application has been described in conjunction with various embodiments as examples as well as implementations. However, other variations can be understood and effected by those persons skilled in the art and practicing the claimed application, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Transmitting device (100) for supporting Hybrid Automatic Repeat Request, HARQ, the transmitting device being configured to:
select a first interleaving sequence (102);
interleave a data unit (101) using the first interleaving sequence (102) to obtain a first interleaved data unit (104) to be transmitted to a receiving device (110); and
if a retransmission of the data unit is required:
select a second interleaving sequence (103), wherein the second interleaving sequence (103) is the first interleaving sequence (102) flipped in the frequency domain, and
interleave the data unit (101) using the second interleaving sequence (103) to obtain a second interleaved data unit (105) to be transmitted to the receiving device (110).

2. Transmitting device (100) according to claim 1, configured to:
select the first interleaving sequence (102) based on one or more transmission parameters, particularly based on a transmission signal bandwidth.

3. Transmitting device (100) according to one of the claims 1 to 2, configured to:
indicate to the receiving device (110) the first and/or second interleaving sequence (102 and/or 103).

4. Transmitting device (100) according to claim 3, configured to:
indicate to the receiving device (110) the second interleaving sequence (103) using a SIG field.

5. Transmitting device (100) according to one of the claims 1 to 4, wherein:
the first interleaving sequence (102) is pre-defined

6. Transmitting device (100) according to one of the claims 1 to 5, configured to:
perform the interleaving of the data unit on coded bits following a binary convolutional coding, BCC, encoding; or
perform the interleaving of the data unit on modulated Quadrature Amplitude Modification symbols, following a low density parity check coding, LDPC; or
perform the interleaving of the data unit within a Turbo encoder.

7. Receiving device (110) for supporting Hybrid Automatic Repeat Request, HARQ, the receiving device being configured to:
receive a first interleaved data unit (104);
select a first de-interleaving sequence (102') according to a first interleaving sequence (102); and
de-interleave the first interleaved data unit (103) using the first de-interleaving sequence (102') to obtain the data unit (101); and
if a retransmission of the data unit is required:
receive a second interleaved data unit (105);
select a second de-interleaving sequence (103') according to a second interleaving sequence (103), wherein the second interleaving sequence (103) is the first interleaving sequence (102) flipped in the frequency domain, and
de-interleave the second interleaved data unit (105) using the second de-interleaving sequence (103') to obtain the retransmission of the data unit (101).

8. Receiving device (110) according to claim 7, configured to:
obtain an indication of the first and/or second interleaving sequence from the transmitting device (100).

9. Receiving device (110) according to claim 8, configured to:
extract an indication of the second interleaving sequence (103) from a SIG field.

10. Receiving device (110) according to claims 7 to 9, configured to:
soft-combine the retransmission of the data unit and the previously transmitted data unit.

11. Method for supporting Hybrid Automatic Repeat Request, HARQ, the method comprising:
selecting (401) a first interleaving sequence;
interleaving (402) a data unit using the first interleaving sequence to obtain a first interleaved data unit to be transmitted; and
if a retransmission of the data unit is required:
selecting (403) a second interleaving sequence, wherein the second interleaving sequence (103) is the first interleaving sequence (102) flipped in the frequency domain, and
interleaving (404) the data unit using the second interleaving sequence to obtain a second interleaved data unit to be transmitted.

12. Method for supporting Hybrid Automatic Repeat Request, HARQ, the method comprising:
receiving (501) a first interleaved data unit;
selecting (502) a first de-interleaving sequence according to a first interleaving sequence; and
de-interleaving (503) the first interleaved data unit using the first de-interleaving sequence to obtain the data unit; and
if a retransmission of the data unit is required:
receiving (504) a second interleaved data unit;
selecting (505) a second de-interleaving sequence according to a second interleaving sequence, wherein the second interleaving sequence (103) is the first interleaving sequence (102) flipped in the frequency domain, and
de-interleaving (506) the second interleaved data unit using the second de-interleaving sequence to obtain the retransmission of the data unit.

## Patentansprüche

1. Sendevorrichtung (100) zur Unterstützung von HARQ, Hybrid Automatic Repeat Request, wobei die Sendevorrichtung ausgelegt ist zum:
Auswählen einer ersten Verschachtelungssequenz (102);
Verschachteln einer Dateneinheit (101) unter Verwendung der ersten Verschachtelungssequenz (102) zum Erhalten einer ersten verschachtelten Dateneinheit (104), die an eine Empfangsvorrichtung (110) gesendet werden soll; und wenn eine erneute Übertragung der Dateneinheit erforderlich ist:
Auswählen einer zweiten Verschachtelungssequenz (103), wobei die zweite Verschachtelungssequenz (103) die erste Verschachtelungssequenz (102) ist, umgeklappt in der Frequenzdomäne, und
Verschachteln der Dateneinheit (101) unter Verwendung der zweiten Verschachtelungssequenz (103) zum Erhalten einer zweiten verschachtelten Dateneinheit (105), die an die Empfangsvorrichtung (110) gesendet werden soll.

2. Sendevorrichtung (100) nach Anspruch 1, ausgelegt zum:
Auswählen der ersten Verschachtelungssequenz (102) basierend auf einem oder mehreren Übertragungsparametern, insbesondere basierend auf einer Übertragungssignalbandbreite.

3. Sendevorrichtung (100) nach einem der Ansprüche 1 bis 2, ausgelegt zum:
Anzeigen, gegenüber der Empfangsvorrichtung (110), der ersten und/oder zweiten Verschachtelungssequenz (102 und/oder 103).

4. Sendevorrichtung (100) nach Anspruch 3, ausgelegt zum:
Anzeigen, gegenüber der Empfangsvorrichtung (110), der zweiten Verschachtelungssequenz (103) unter Verwendung eines SIG-Feldes.

5. Sendevorrichtung (100) nach einem der Ansprüche 1 bis 4, wobei:
die erste Verschachtelungssequenz (102) vordefiniert ist.

6. Sendevorrichtung (100) nach einem der Ansprüche 1 bis 5, ausgelegt zum:
Durchführen des Verschachtelns der Dateneinheit auf codierten Bits im Anschluss an eine binäre Faltungscode- bzw. BCC-Codierung; oder
Durchführen des Verschachtelns der Dateneinheit auf modulierten Quadraturamplitudenmodifikationssymbolen, QAMs, im Anschluss an eine Low-Density-Parity-Check- bzw. LDPC-Codierung; oder
Durchführen des Verschachtelns der Dateneinheit innerhalb eines Turbocodierers.

7. Empfangsvorrichtung (110) zur Unterstützung von HARQ, Hybrid Automatic Repeat Request, wobei die Empfangsvorrichtung ausgelegt ist zum:
Empfangen einer ersten verschachtelten Dateneinheit (104);
Auswählen einer ersten Entschachtelungssequenz (102') entsprechend einer ersten Verschachtelungssequenz (102); und
Entschachteln der ersten verschachtelten Dateneinheit (103) unter Verwendung der ersten Entschachtelungssequenz (102') zum Erhalten der Dateneinheit (101); und
wenn eine erneute Übertragung der Dateneinheit erforderlich ist:
Empfangen einer zweiten verschachtelten Dateneinheit (105);
Auswählen einer zweiten Entschachtelungssequenz (103') entsprechend einer zweiten Verschachtelungssequenz (103), wobei die zweite Verschachtelungssequenz (103) die erste Verschachtelungssequenz (102) ist, umgeklappt in der Frequenzdomäne, und Entschachteln der zweiten verschachtelten Dateneinheit (105) unter Verwendung der zweiten Entschachtelungssequenz (103') zum Erhalten der erneuten Übertragung der Dateneinheit (101).

8. Empfangsvorrichtung (110) nach Anspruch 7, ausgelegt zum:
Erhalten einer Anzeige der ersten und/oder zweiten Verschachtelungssequenz von der Sendevorrichtung (100).

9. Empfangsvorrichtung (110) nach Anspruch 8, ausgelegt zum:
Extrahieren einer Anzeige der zweiten Verschachtelungssequenz (103) aus einem SIG-Feld.

10. Empfangsvorrichtung (110) nach Ansprüchen 7 bis 9, ausgelegt zum:
weichen Kombinieren der erneuten Übertragung der Dateneinheit und der vorher gesendeten Dateneinheit.

11. Verfahren zur Unterstützung von HARQ, Hybrid Automatic Repeat Request, wobei das Verfahren Folgendes umfasst:
Auswählen (401) einer ersten Verschachtelungssequenz;
Verschachteln (402) einer Dateneinheit unter Verwendung der ersten Verschachtelungssequenz zum Erhalten einer ersten verschachtelten Dateneinheit, die gesendet werden soll; und
wenn eine erneute Übertragung der Dateneinheit erforderlich ist:
Auswählen (403) einer zweiten Verschachtelungssequenz, wobei die zweite Verschachtelungssequenz (103) die erste Verschachtelungssequenz (102) ist, umgeklappt in der Frequenzdomäne, und
Verschachteln (404) der Dateneinheit unter Verwendung der zweiten Verschachtelungssequenz zum Erhalten einer zweiten verschachtelten Dateneinheit, die gesendet werden soll.

12. Verfahren zur Unterstützung von HARQ, Hybrid Automatic Repeat Request, wobei das Verfahren Folgendes umfasst:
Empfangen (501) einer ersten verschachtelten Dateneinheit;
Auswählen (502) einer ersten Entschachtelungssequenz entsprechend einer ersten Verschachtelungssequenz, und
Entschachteln (503) der ersten verschachtelten Dateneinheit unter Verwendung der ersten Entschachtelungssequenz zum Erhalten der Dateneinheit; und
wenn eine erneute Übertragung der Dateneinheit erforderlich ist:
Empfangen (504) einer zweiten verschachtelten Dateneinheit;
Auswählen (505) einer zweiten Entschachtelungssequenz entsprechend einer zweiten Verschachtelungssequenz, wobei die zweite Verschachtelungssequenz (103) die erste Verschachtelungssequenz (102) ist, umgeklappt in der Frequenzdomäne, und
Entschachteln (506) der zweiten verschachtelten Dateneinheit unter Verwendung der zweiten Entschachtelungssequenz zum Erhalten der erneuten Übertragung der Dateneinheit.

## Revendications

1. Dispositif d'émission (100) pour la prise en charge d'une demande de répétition automatique hybride, HARQ, le dispositif d'émission étant configuré pour :
sélectionner une première séquence d'entrelacement (102) ;
entrelacer une unité de données (101) à l'aide de la première séquence d'entrelacement (102) pour obtenir une première unité de données entrelacée (104) devant être émise vers un dispositif de réception (110) ; et
si une réémission de l'unité de données est nécessaire :
sélectionner une seconde séquence d'entrelacement (103), la seconde séquence d'entrelacement (103) étant la première séquence d'entrelacement (102) inversée dans le domaine fréquentiel, et
entrelacer l'unité de données (101) à l'aide de la seconde séquence d'entrelacement (103) pour obtenir une seconde unité de données entrelacée (105) devant être émise vers le dispositif de réception (110).

2. Dispositif d'émission (100) selon la revendication 1, configuré pour :
sélectionner la première séquence d'entrelacement (102) en fonction d'un ou de plusieurs paramètres d'émission, en particulier en fonction d'une largeur de bande de signal d'émission.

3. Dispositif d'émission (100) selon l'une des revendications 1 à 2, configuré pour :
indiquer au dispositif de réception (110) la première et/ou la seconde séquence d'entrelacement (102 et/ou 103).

4. Dispositif d'émission (100) selon la revendication 3, configuré pour :
indiquer au dispositif de réception (110) la seconde séquence d'entrelacement (103) à l'aide d'un champ SIG.

5. Dispositif d'émission (100) selon l'une des revendications 1 à 4, dans lequel :
la première séquence d'entrelacement (102) est prédéfinie.

6. Dispositif d'émission (100) selon l'une des revendications 1 à 5, configuré pour :
effectuer l' entrelacement de l'unité de données sur des bits codés à la suite d'un codage par encodage convolutif binaire, BCC ; ou
effectuer l'entrelacement de l'unité de données sur des symboles de modification d'amplitude en quadrature, QAM, modulés, à la suite d'un codage de contrôle de parité de faible densité, LDPC ; ou
effectuer l'entrelacement de l'unité de données au sein d'un turbo codeur.

7. Dispositif de réception (110) pour la prise en charge d'une demande de répétition automatique hybride, HARQ, le dispositif de réception étant configuré pour :
recevoir une première unité de données entrelacée (104) ;
sélectionner une première séquence de désentrelacement (102') selon une première séquence d'entrelacement (102) ; et
désentrelacer la première unité de données entrelacée (103) à l'aide de la première séquence de désentrelacement (102') pour obtenir l'unité de données (101) ; et
si une réémission de l'unité de données est nécessaire :
recevoir une seconde unité de données entrelacée (105) ;
sélectionner une seconde séquence de désentrelacement (103') selon une seconde séquence d'entrelacement (103), la seconde séquence d'entrelacement (103) étant la première séquence d'entrelacement (102) inversée dans le domaine fréquentiel, et
désentrelacer la seconde unité de données entrelacée (105) à l'aide de la seconde séquence de désentrelacement (103') pour obtenir la réémission de l'unité de données (101).

8. Dispositif de réception (110) selon la revendication 7, configuré pour :
obtenir une indication de la première et/ou de la seconde séquence d'entrelacement en provenance du dispositif d'émission (100).

9. Dispositif de réception (110) selon la revendication 8, configuré pour :
Extraire, d'un champ SIG, une indication de la seconde séquence d'entrelacement (103).

10. Dispositif de réception (110) selon les revendications 7 à 9, configuré pour :
réaliser une combinaison douce de la réémission de l'unité de données et de l'unité de données précédemment émise.

11. Procédé pour la prise en charge d'une demande de répétition automatique hybride, HARQ, le procédé comprenant :
la sélection (401) d'une première séquence d'entrelacement ;
l'entrelacement (402) d'une unité de données à l'aide de la première séquence d'entrelacement pour obtenir une première unité de données entrelacée devant être émise ; et
si une réémission de l'unité de données est nécessaire :
la sélection (403) d'une seconde séquence d'entrelacement, la seconde séquence d'entrelacement (103) étant la première séquence d'entrelacement (102) inversée dans le domaine fréquentiel, et
l'entrelacement (404) de l'unité de données à l'aide de la seconde séquence d'entrelacement pour obtenir une seconde unité de données entrelacée devant être émise.

12. Procédé pour la prise en charge d'une demande de répétition automatique hybride, HARQ, le procédé comprenant :
la réception (501) d'une première unité de données entrelacée ;
la sélection (502) d'une première séquence de désentrelacement selon une première séquence d'entrelacement ; et
le désentrelacement (503) de la première unité de données entrelacée à l'aide de la première séquence de désentrelacement pour obtenir l'unité de données ; et
si une réémission de l'unité de données est nécessaire :
la réception (504) d'une seconde unité de données entrelacée ;
la sélection (505) d'une seconde séquence de désentrelacement selon une seconde séquence d'entrelacement, la seconde séquence d'entrelacement (103) étant la première séquence d'entrelacement (102) inversée dans le domaine fréquentiel, et
le désentrelacement (506) de la seconde unité de données entrelacée à l'aide de la seconde séquence de désentrelacement pour obtenir la réémission de l'unité de données.
